(19) Europäisches Patentamt
European Patent Office
Office européen des brevets

(11) **EP 3 953 174 B1**

(12) **EUROPEAN PATENT SPECIFICATION**

(45) Date of publication and mention
of the grant of the patent:
**23.07.2025 Bulletin 2025/30**

(21) Application number: **20715392.5**

(22) Date of filing: **06.04.2020**

(51) International Patent Classification (IPC):
***B32B 27/08*** (2006.01)     ***B32B 27/18*** (2006.01)
***B32B 27/20*** (2006.01)     ***B32B 27/32*** (2006.01)

(52) Cooperative Patent Classification (CPC):
**B32B 27/32; B32B 27/08; B32B 27/18;**
**B32B 27/20;** B32B 2250/242; B32B 2250/40;
B32B 2270/00; B32B 2272/00; B32B 2307/30;
B32B 2307/40; B32B 2307/54; B32B 2307/72;
B32B 2307/734; B32B 2307/736; B32B 2553/00

(86) International application number:
**PCT/EP2020/059706**

(87) International publication number:
**WO 2020/207940 (15.10.2020 Gazette 2020/42)**

(54) **COLLATION SHRINK FILM**

KOLLATIONSSCHRUMPFFOLIE

FILM RÉTRACTABLE DE COLLATION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **09.04.2019 EP 19168093**

(43) Date of publication of application:
**16.02.2022 Bulletin 2022/07**

(73) Proprietor: **Borealis AG**
**1020 Vienna (AT)**

(72) Inventors:
• **SEMAAN, Chantal**
**43003 Tarragona (ES)**
• **NUMMILA-PAKARINEN, Auli**
**06101 Porvoo (FI)**
• **GOETZLOFF, Christian**
**4021 Linz (AT)**

(74) Representative: **Maiwald GmbH**
**Elisenhof**
**Elisenstraße 3**
**80335 München (DE)**

(56) References cited:
EP-A1- 2 415 598     US-A- 5 455 303
US-A1- 2014 127 489     US-A1- 2018 281 369

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a multilayer collation shrink film, comprising at least two layers, e.g. at least three layers, wherein at least one layer A) comprises at least a1) a specific multimodal polymer of ethylene, a2) a specific multimodal terpolymer of ethylene and a3) LDPE and at least one layer B) comprises at least b1) recycled LDPE and b2) a specific multimodal terpolymer of ethylene. The invention further refers to a method for manufacturing this multilayer film and its use in the field of secondary packaging.

Nowadays, the attempt of using polymers obtained from waste materials for the manufacturing of new products is of increasing interest and importance for ecological reasons and for reducing costs. Due to the growing environmental problems caused by plastics, the focus today is on the recycling of these plastics.

Secondary packagings, like collation shrink films, do not require a food approval and a large amount of recycled material is resulting from flexible applications. Due to the original material design the best use of this material would be in a flexible application. Therefore, secondary packagings are a perfect fit application for using recycled plastics. Nevertheless, the use of recycled materials is limited due to their lower performances. However, multilayer collation shrink films comprising recycled plastics are also known in the prior art.

WO 91/17886 A1 relates to the use of multilayer heat shrinkable film for advantageous high shrinkage but low shrinkage force is combined with the use of recycle scrap of such film to provide a multilayer heat shrinkable film retaining these advantageous properties. Exemplary of the film is a core of a blend of certain linear low density polyethylene with certain highly branched low density polyethylene sandwiched between two relatively thin outer layers of propylene/ethylene copolymer, with the core also containing recycle scrap of the multilayer film.

DE 20 2018 101 226 U1 refers to a packaging for bottles or cans with the following components; 1) an outer packaging for at least partially repackaging bottles or cans consisting of a heat-shrinkable plastic film and 2) a carrying handle fastened to the outer packaging with a carrying handle additional component, wherein all components of the packaging consist of at least one recyclable plastic and wherein the carrying handle additional component consists of a printable plastic and has an imprint.

In most of the multilayer collation shrink films the use of more than 25 % of recycled material is not possible without significant deterioration of the mechanical properties. Inhomogeneities originating from contaminants from the original use, collection and recycling of flexible materials increase the risk for hole formation in an oven, for example a shrink oven. LDPE is the most sensitive material for hole formation due to inhomogeneities.

EP 2 415 598 relates to a multilayer film which comprises a core layer (C) and two outer layers (O-1, O-2) sandwiching the core layer, and its use for packaging, especially for frozen food packaging. The core layer (C) comprises a bimodal ethylene/1-butene/$C_6$-$C_{12}$-$\alpha$-olefin terpolymer, One outer layer (O-1) comprises a low density polyethylene or the bimodal terpolymer as defined for the core layer (C) or a metallocene produced linear low density polyethylene and optionally a low density polyethylene. The other outer layer (O-2) comprises a metallocene produced linear low density polyethylene and optionally a low density polyethylene.

Based on this it was one objective of the present invention to provide a multilayer collation shrink film allowing the use of bigger amounts of recycled LDPE with low or no hole formation. It was another objective of the present invention that the multilayer collation shrink film shows very good mechanical properties without increasing the film thickness. Furthermore, it was the objective of the present invention that the multilayer collation shrink film has good optical surface layer properties, a good shrink behaviour and a good balance between holding force and cold shrink properties.

This objective is satisfied by a multilayer collation shrink film in accordance with claim 1 comprising at least the following layers:

A) a layer comprising at least the following components:

a1) a multimodal polymer of ethylene with at least two different comonomers selected from alpha-olefins having from 4 to 10 carbon atoms, which multimodal polymer of ethylene has a density in the range from 910 to 935 kg/m$^3$, and a Mw/Mn of 2 to 8;
a2) a multimodal terpolymer of ethylene and two alpha olefin comonomers wherein the multimodal terpolymer has a density in the range from 930 to 950 kg/m$^3$ and a Mw/Mn of 10 to 20; and
a3) LDPE;

B) a layer comprising at least the following components:

b1) recycled LDPE; and
b2) a multimodal terpolymer of ethylene and two alpha olefin comonomers wherein the multimodal terpolymer has a density in the range from 930 to 950 kg/m$^3$ and a Mw/Mn of 10 to 20.

Advantageous embodiments of the multilayer collation shrink film in accordance with the present invention are specified in the dependent claims 2 to 13.

The present invention further relates in accordance with claim 14 to a method for manufacturing the collation shrink film. Claim 15 relates to the use of the film according to the present invention for secondary packaging and claim 16 refers to the use of multimodal terpolymer b2) as defined above in a layer of a multilayer collation shrink film comprising in the same layer at least 50 wt.-% of recycled LDPE b1).

**Definitions:**

In the present invention the term "multimodal" can mean multimodal with respect to molecular weight distribution and includes also therefore bimodal polymers. However, as explained in the detailed description of the components, the components can also be multimodal with respect to other properties, like the MFR or the density.

Usually, a polymer composition, comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, the term multimodal polymer includes so called "bimodal" polymers consisting of two fractions. The form of the molecular weight distribution curve, i.e. the appearance of the graph of the polymer weight fraction as a function of its molecular weight, of a multimodal polymer, e.g. LLDPE, will show two or more maxima or at least be distinctly broadened in comparison with the curves for the individual fractions.

Ideally, the molecular weight distribution curve for multimodal polymers of the invention will show two distinction maxima. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal polymer, there is by definition a lower molecular weight component (LMW) and a higher molecular weight component (HMW). The LMW component has a lower molecular weight than the higher molecular weight component. This difference is preferably at least 5000 g/mol.

In the sense of the present invention it is preferred that all olefins are alpha olefins.

The meaning of low density polyethylene (LDPE) is well known and documented in the literature. Although the term LDPE is an abbreviation for low density polyethylene, the term is understood not to limit the density range, but covers the LDPE-like HP polyethylenes, which are produced by free-radical polymerization in a high-pressure process, with low, medium and higher densities. The term LDPE describes and distinguishes only the nature of HP polyethylene with typical features, such as different branching architecture, compared to the polyethylene produced in the presence of an olefin polymerization catalyst. Moreover, said low density polyethylene (LDPE) homopolymer, may be unsaturated.

In the present invention "collation shrink films" are films that are wrapped around an object to be packaged and shrunk to keep the units within the object together. The most common use of these films is in the packaging of multiple containers (items), such as bottles or cans which might contain food, beverages and so on. The collation shrink film is wrapped around a number of the containers, perhaps a 6-pack of drinks or 24-pack of food cans optionally held in a cardboard tray or pad and shrunk around the containers. The wrapping process typically involves a shrink oven or shrink tunnel in which the film and object covered by the film is briefly heated to cause the collation shrink wrapping to occur. The plastic film then collapses around the multiple containers and holds the units in place.

For the purposes of the present description and of the subsequent claims, the term "recycled LDPE" is used to indicate that the material is recovered from post-consumer waste and/or industrial waste. Namely, post-consumer waste refers to objects having completed at least a first use cycle (or life cycle), i.e. having already served their first purpose; while industrial waste refers to the manufacturing scrap which does normally not reach a consumer. In the gist of the present invention "recycled LDPE" may also comprise up to 20 wt.-%, preferably up to 15 wt.-%, more preferably up to 10 wt.-% and even more preferably up to 5 wt.-% based on the overall weight of component b1) of other components like for example LLDPE, MDPE, HDPE. Respectively, the term "virgin" denotes the newly produced materials and/or objects prior to first use and not being recycled. In case that the origin of the polymer is not explicitly mentioned the polymer is a "virgin" polymer.

The "density" of the materials described in the present description and claims means the density determined according to ISO 1183.

The "melt flow rate" (= MFR) of the polymers described in the present description and claims means the MFR determined according to ISO 1133.

The "melting temperature" of the polymers described in the present description and claims may be measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C.

Crystallization temperature ($T_c$) and crystallization enthalpy ($H_{cryst}$) are determined from the cooling step, while melting temperature ($T_m$) and heat of fusion ($H_{fusion}$) are determined from the second heating step. The crystallinity is calculated from the heat of fusion by assuming an $H_{fusion}$-value of 209 J/g for a fully crystalline polypropylene (see Brandrup, J., Immergut, E. H., Eds. Polymer Handbook, 3rd ed. Wiley, New York, 1989; Chapter 3).

Indications of Quantity

Layer A) of the multilayer collation shrink film in accordance with the present invention comprises components a1), a2), a3) and these components optionally contain additives and/or admixtures and layer B) comprises components b1), b2) and these components optionally contain additives and/or admixtures. The requirement applies here that the components a1), a2), a3) and if present including the additives add up to 100 wt.-% in sum and that components b1), b2) and if present including the additives add up to 100 wt.-% in sum. The fixed ranges of the indications of quantity for the individual components a1), a2), a3) or b1), b2) respectively and optionally the additives and/or admixtures are to be understood such that an arbitrary quantity for each of the individual components can be selected within the specified ranges provided that the strict provision is satisfied that the sum of all the components a1), a2) a3) or b1), b2) respectively and optionally the additives and/or admixtures add up to 100 wt.-%.

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Component a1)

Layer A) of the multilayer collation shrink film in accordance with the present invention comprises as component a1) a multimodal polymer of ethylene with at least two different comonomers selected from alpha-olefins having from 4 to 10 carbon atoms, which multimodal polymer of ethylene has a density in the range from 910 to 935 kg/m$^3$, and a Mw/Mn of 2 to 8.

Preferred embodiments of component a1) will be discussed in the following.

According to one preferred embodiment of the present invention the content of component a1) in layer A) is from 5 to 25 wt.-%, more preferably from 10 to 20 wt.-% and most preferably from 14 to 16 wt.-% based on the overall weight of layer A.

Another preferred embodiment of the present invention stipulates that component a1) comprises at least two comonomers (i) and (ii), preferably selected from the group consisting of 1-butene, 1-hexene and 1-octene, more preferably 1-butene and 1-hexene and even more preferably comprises an ethylene butene copolymer component (i) and an ethylene hexene copolymer component (ii), where butene and hexene are the only comonomers present in the respective component. More preferably the copolymers (i) and (ii) have different MFR values and/or different densities. It is furthermore preferred that copolymer (i) has a higher density than copolymer (ii).

According to another preferred embodiment component a1) is a terpolymer comprising an ethylene butene copolymer (i) and an ethylene hexene copolymer (ii).

According to still a further preferred embodiment of the present invention component a1) has a $MFR_2$ in the range from 0.5 to 10 g/10 min, preferably in the range from 0.5 to 5 g/10 min and more preferably in the range from 1.0 to 2.5 g/10 min determined according to ISO 1133 at 190°C under 2.16 kg load.

In addition, another preferred embodiment stipulates that the $MFR_{21}/MFR_2$ of component a1) is in the range from 13 to 35, preferably in the range from 15 to 30 and more preferably in the range from 15 to 25 ($MFR_{21}$ determined at 190°C under 21.6 kg load).

Still another preferred embodiment stipulates that the MWD (molecular weight distribution) of component a1) is in the range from 2 to 7, preferably in the range from 2 to 6 and more preferably in the range from 2 to 5.

In a preferred embodiment, the multimodal polymer of ethylene (A) has one or more of the features:

a) $MFR_2$ of 0.5 to 10 g/10 min (according to ISO 1133 at 190°C under 2.16 kg load);
b) $MFR_{21}/MFR_2$ of 13 to 35 ($MFR_{21}$ at 190°C under 21.6 kg load);
c) MWD of 5 or less, preferably between 2 and 5.

According to a further preferred embodiment the multimodal polymer of ethylene a1) is preferably a linear low density polyethylene (LLDPE). Even more preferably the density of the multimodal polymer of ethylene a1) is in the range from 915 to 930 kg/m$^3$ and more preferably in the range from 915 to 925 kg/m$^3$.

Still another preferred embodiment of the present invention stipulates that The Mw of the multimodal polymer of ethylene a1) is in the range from 70,000 to 200,000 and preferably in the range from 80,000 to 150,000.

Another preferred embodiment of the present invention stipulates that the multimodal polymer of ethylene a1) preferably comprises a minimum of 20 wt.-% eluting in TREF (Temperature Rising Elution Fractionation) in the temperature range of 90 to 110°C, preferably at least 22 wt.-%, and more preferable in the range from 20 to 35 wt.-%.

According to another preferred embodiment of the present invention the multimodal polymer of ethylene a1) comprises the ethylene polymer comonomer (i) in an amount in the range from 30 to 70 wt.-%, preferably in the range from 40 to 60 wt.-%, more preferably in the range from 35 to 50 wt.-%, more preferably in the range from 40 to 50 wt.-% and the ethylene copolymer (ii) in an amount in the range from 70 to 30 wt.-%, preferably in the range from 60 to 40 wt.-%, more preferably in the range from 50 to 65 wt.-%, more preferably in the range from 50 to 60 wt.-%, based on the total amount (100 wt.-%) of the multimodal polymer of ethylene a1).

A further preferred embodiment of the present invention stipulates that the multimodal polymer of ethylene a1) consists of the ethylene copolymers (i) and (ii) as the sole polymer components. Accordingly, the split between ethylene copolymer (i) to ethylene copolymer (ii) is of (30 to 70):(70 to 30) preferably of (40 to 60):(60 to 40), more preferably of (35 to 50):(65 to 50), more preferably of (40 to 50):(50 to 60), wt.-%.

According to a further preferred embodiment the multimodal polymer of ethylene (a1) preferably comprises a lower Mw copolymer (i) and a higher molecular weight copolymer (ii).

Another preferred embodiment of the present invention stipulates that copolymer (i) has a $MFR_2$ of 1 to 50 g/10 min, preferably of 1 to 40, more preferably of 1 to 30, more preferably of 2 to 20, more preferably of 2 to 15, even more preferably of 2 to 10 g/10 min. More preferably, the ethylene copolymer (i) has higher $MFR_2$ than ethylene copolymer (ii). Even more preferably, the ratio of the $MFR_2$ of ethylene copolymer (i) to the $MFR_2$ of the final multimodal polymer of ethylene (a1) is of 2 to 50, preferably of 5 to 40, preferably of 10 to 30, more preferably of 10 to 25, more preferably of 15 to 25.

If the $MFR_2$ of ethylene polymer copolymer, e.g. copolymer (ii), cannot be measured, because it cannot be isolated from the mixture of at least ethylene copolymers (i) and (ii), then it can be calculated using a log mixing rule.

Naturally, in addition to multimodality with respect to, i.e. difference between, the MFR of the ethylene copolymers (i) and (ii), the polymer of ethylene (a1) can also be multimodal e.g. with respect to one or both of the two further properties:

> multimodality with respect to, i.e. difference between, the comonomer type or the comonomer content(s) present in the ethylene copolymers (i) and (ii), or both the type and content(s) of comonomers present in the ethylene copolymers (i) and (ii); and/or

> the density of the ethylene copolymers (i) and (ii).

Preferably, the multimodal polymer of ethylene (a1) of the polymer composition is further multimodal with respect to comonomer type and/or comonomer content (mol-%), preferably wherein the alpha-olefin comonomer having from 4 to 10 carbon atoms of ethylene copolymer (i) is different from the alpha-olefin comonomer having from 4 to 10 carbon atoms of ethylene copolymer (ii), preferably wherein the alpha-olefin comonomer having from 4 to 10 carbon atoms of ethylene copolymer (i) is 1-butene and the alpha-olefin comonomer having from 4 to 10 carbon atoms of ethylene copolymer (ii) is 1-hexene.

Preferably, the ratio of [the amount (mol-%) of alpha-olefin comonomer having from 4 to 10 carbon atoms comonomer present in ethylene copolymer (i)] to [the amount (mol%) of at least two alpha-olefin comonomers having from 4 to 10 carbon atoms of the final multimodal polymer of ethylene a1)] is of 0.2 to 0.6, preferably of 0.24 to 0.5, more preferably the ethylene copolymer (i) has a lower amount (mol%) of comonomer than the ethylene copolymer (ii).

The comonomer content of copolymers (i) and (ii) can be measured, or, in case, and preferably, one of the components is produced first and the other thereafter in the presence of the first produced in so called multistage process, then the comonomer content of the first produced copolymer, e.g. copolymer (i), can be measured and the comonomer content of the other copolymer, e.g. copolymer (ii), can be calculated according to following formula:

*Comonomer content (mol-%) in copolyer (ii) = (comonomer content (mol-%) in final product - (weight fraction of copolymer (i) * comonomer content (mol-%) in copolymer (i)) / (weight fraction of copolymer (i)i)*

Copolymers (i) and (ii) can be produced in the same or different reactors.

According to another preferred embodiment of the present invention the amount (mol-%) of alpha-olefin comonomer having from 4 to 10 carbon atoms present in the ethylene copolymer (i) is in the range from 0.03 to 5.0 mol-%, preferably in the range from 0.05 to 4.0 mol-%, more preferably in the range from 0.1 to 3.0 mol-%, even more preferably in the range from 0.1 to 2.0 mol-%, more preferably in the range from 0.15 to 1.5 mol-% and even more preferably in the range from 0.15 to 1.0 mol%.

More preferably, the total amount of comonomers present in the multimodal polymer of ethylene (a1) is in the range from 0.5 to 10 mol-%, preferably the in range from 1.0 to 8 mol-%, more preferably in the range from 1.0 to 5 mol-% and more preferably in the range from 1.5 to 5.0 mol-%.

According to a further preferred embodiment the multimodal polymer of ethylene (a1) of the polymer composition is further multimodal with respect to difference in density between the ethylene copolymer (i) and ethylene copolymer (ii). Preferably, the density of ethylene copolymer (i) is different, preferably higher, than the density of the ethylene copolymer (ii). More preferably the density of the ethylene copolymer (i) is in the range from 925 to 950 and preferably in the range from 930 to 945 kg/m$^3$.

In a preferred embodiment the multimodal polymer of ethylene (a1) comprises at least

- an ethylene copolymer (i) and
- an ethylene copolymer(ii), wherein the $MFR_2$ of ethylene copolymer (i) is higher than the $MFR_2$ of ethylene copolymer (ii), preferably wherein the ratio of the $MFR_2$ of ethylene polymer component (i) to the $MFR_2$ of the final multimodal polymer of ethylene a1) is in the range from 2 to 50, preferably in the range from 5 to 40 and more preferably in the range from 10 to 30.

Another preferred embodiment of the present invention stipulates that the density of the multimodal polymer of ethylene a1) is in the range from 915 to 930 kg/m$^3$ and an $MFR_2$ in the range from 0.5 to 10 g/10 min.

In another preferred embodiment the multimodal polymer of ethylene a1) is produced using a single site catalyst, preferably the ethylene copolymers are produced using the same single site catalyst.

It is furthermore preferred that the multimodal polymer a1) is bimodal.

A further preferred embodiment of the present invention stipulates that multimodal polymer a1) is a virgin polymer.

Components a2) and b2

Layer A) of the multilayer collation shrink film in accordance with the present invention comprises as component a2) a multimodal terpolymer of ethylene and two alpha olefin comonomers wherein the multimodal terpolymer has a density in the range from 930 to 950 kg/m$^3$ and a Mw/Mn of 10 to 20.

A preferred embodiment stipulates that the multimodal terpolymer a2) has a density in the range from 930 to 940 kg/m$^3$ and a Mw/Mn of 10 to 20.

Layer B) of the multilayer collation shrink film in accordance with the present invention comprises as component b2) a multimodal terpolymer of ethylene and two alpha olefin comonomers wherein the multimodal terpolymer has a density in the range from 930 to 950 kg/m$^3$ and a Mw/Mn of 10 to 20.

A preferred embodiment stipulates that the multimodal terpolymer b2) has a density in the range from 930 to 940 kg/m$^3$ and a Mw/Mn of 10 to 20.

A preferred embodiment of the present invention stipulates that components a2) and b2) are identical. However, it is within the scope of the present invention that components a2) and b2) are different.

Preferred embodiments of component a2) and b2) will be discussed in the following. According to a preferred embodiment of the present invention the content of component a2) in layer A) is in the range from 5 to 25 wt.-%, more preferably in the range from 10 to 20 wt.-% and most preferably in the range from 14 to 16 wt.-% based on the overall weight of layer A).

A further preferred embodiment of the present invention stipulates that the content of component b2) in layer B) is in the range from 5 to 40 wt.-%, preferably from 20 to 40 wt.-%, more preferably in the range from 25 to 35 wt.-% and most preferably in the range from 28 to 32 wt.-% based on the overall weight of layer B).

The polyethylene terpolymer(s) a2) and/or b2) according to the present invention are multimodal, such as bimodal, i.e. its molecular weight profile does not comprise a single peak but instead comprises the combination of two or more peaks (which may or may not be distinguishable) centred about different average molecular weights as a result of the fact that the polymer comprises two separately produced components.

Alternatively, the multimodal terpolymer(s) a2) and/or b2) of the present invention can be multimodal in view of its comonomer content or in view of the nature of the comonomers. It is preferred if the multimodal terpolymer is multimodal with respect to molecular weight distribution.

Multimodal polyethylene terpolymer(s) a2) and/or b2) are typically made in more than one reactor, each having different conditions. The components of the multimodal terpolymers a2) and b2) are typically so different that they show more than one peak or shoulder in the diagram given as result of its GPC (gel permeation chromatograph) curve, where d(log(MW)) is plotted as ordinate vs log(MW), where MW is molecular weight.

According to a preferred embodiment of the present invention the multimodal polyethylene terpolymer(s) a2) and/or b2) may comprise at least two C4-12 alpha-olefin comonomers. Ideally, the multimodal polyethylene terpolymer(s) a2) and/or b2) contain 2 comonomers only. These comonomers are especially selected from the group consisting of 1-butene, 1-hexene or 1-octene. The amount of comonomers present in the multimodal terpolymers a2) and b2) is preferably in the range from 0.5 to 12 mol-%, more preferably 2 to 10 mol-% and more preferably 4 to 8 mol-%.

The multimodal polyethylene terpolymer(s) a2) and/or b2) suitable for use in the multilayer collation shrink films of the present invention can comprise a lower molecular weight fraction being a polyethylene homopolymer and a higher molecular weight fraction being a terpolymer of ethylene and at least two alpha olefin comonomers having 4 to 10 carbon atoms.

The multimodal polyethylene terpolymer(s) a2) and/or b2) suitable for use in the multilayer collation shrink films of the present invention can preferably comprise

(A-1) a lower molecular weight homopolymer of ethylene; and
(A-2) a higher molecular weight terpolymer of ethylene, 1-butene and a C6-C12-alpha-olefin or
(B-1) a lower molecular weight copolymer of ethylene and 1-butene; and
(B-2) a higher molecular weight copolymer of ethylene and a C6-C12-alpha-olefin such as 1-hexene; or
(C-1) a lower molecular weight copolymer of ethylene and a C6-C12-alpha olefin; and
(C-2) a higher molecular weight copolymer of a terpolymer of ethylene, 1-butene and a C6-C12-alpha olefin.

Preferably the comonomer of the higher molecular weight component is a C6-C12-alpha-olefin selected from the group consisting of 1-hexene, 4-methyl-1-pentene, 1-octene and 1-decene, especially 1-hexene or 1-octene.

More preferably the multimodal polyethylene terpolymer(s) a2) and/or b2) comprises lower and higher molecular weight components as defined in (A-1) and (A-2).

The multimodal polyethylene composition may be produced by polymerisation using conditions which create a multimodal (e.g. bimodal) polymer product ideally using a Ziegler Natta catalyst system. Typically, a two or more stage, i.e. multistage, polymerisation process is used with different process conditions in the different stages or zones (e.g. different temperatures, pressures, polymerisation media, hydrogen partial pressures, etc). Preferably, the multimodal (e.g. bimodal) composition is produced by a multistage polymerisation, e.g. using a series of reactors, with optional comonomer addition preferably in only the reactor(s) used for production of the higher/highest molecular weight component(s). A multistage process is defined to be a polymerisation process in which a polymer comprising two or more fractions is produced by producing each or at least two polymer fraction(s) in a separate reaction stage, usually with different reaction conditions in each stage, in the presence of the reaction product of the previous stage which comprises a polymerisation catalyst. The polymerisation reactions used in each stage may involve conventional ethylene homopolymerisation or copolymerisation reactions, e.g. gas-phase, slurry phase, liquid phase polymerisations, using conventional reactors, e.g. loop reactors, gas phase reactors, batch reactors etc. (see for example WO97/44371 and WO96/18662). Terpolymers meeting the requirements of the invention are known and can be bought from suppliers such as Borealis and Borouge, e.g. FX1002.

A preferred embodiment of the present invention stipulates that the multimodal terpolymer(s) a2) and/or b2) have a density in the range from 920 to 950 kg/m$^3$, more preferably from 927 to 947 kg/m$^3$, even more preferably in the range from 930 to 945 kg/m$^3$ and most preferably in the range from 933 to 940 kg/m$^3$. Ideally, the multimodal terpolymer has a density in the range from 930 to 936 kg/m$^3$. Alternatively, the density may be in the range from 933 to 938 kg/m$^3$.

The melt flow rate 190/5 according to ISO1133 (i.e. MFR5) of the multimodal terpolymer(s) a2) and/or b2) is preferably in the range from 0.05 to 20 g/10min, more preferably in the range from 0.1 to 10 g/10min and even more preferably in the range from 0.2 to 6.0 g/10min. The MFR5 is highly preferably in the range from 0.10 to 5.0 g/10min.

The MFR21 of the multimodal terpolymer(s) a2) and/or b2) may be in the range from 5.0 to 200 g/10min, preferably in the range from 10.0 to 200 g/10min, more preferably in the range from 10.0 to 100 g/10min, even more preferably in the range from 15.0 to 50.0 g/10min and most preferably in the range from 15 to 45 g/10 min.

The ratio of MFR21 to MFR5 is an indication on molecular weight distribution and to a certain extent also to the processability. The ratio of MFR21 to MFR5 is understood as FRR 21/5.

According to a preferred embodiment of the present invention the FRR21/5 of multimodal terpolymers a2) and/or b2) is at least 10.0 or higher, preferably 15.0 or higher, more preferably in the range from 18.0 or 21.0. The FRR21/5 is usually 50.0 or below, preferably 35.0 or lower and more preferably in the range from 32.0 or 28.0. It is thus preferred that the FRR21/5 of the multimodal terpolymer(s) a2) and/or b2) is in the range from 10.0 to 50.0, preferably in the range from 15.0 to 35.0 and more preferably in the range from 18.0 to 32.0. It is preferred, if the multimodal polyethylene terpolymer(s) a2) and/or b2) of the present invention has a MFR21 in the range from 10.0 to 50.0 g/10 min and a FRR21/5 of at least 10.

The Mw of the multimodal terpolymer(s) a2) and/or b2) may be in the range from 80,000 to 300,000, preferably in the range from 100,000 to 270,000 and more preferably in the range from 120,000 to 160,000. The Mw/Mn of the multimodal terpolymer(s) a2) and/or b2) may be in the range from 10 to 30, preferably in the range from 10 to 25, more preferably in the range from 14 to 18 and most preferably in the range from 15 to 16.5.

According to a further preferred embodiment of the present invention the lower molecular weight fraction of the multimodal polyethylene terpolymer(s) a2) and/or b2) may have a $MFR_2$ of at least 50.0, preferably in the range from 50.0 to 3000 g/10 min and more preferably at least 100 g/10 min. The molecular weight of the lower molecular weight component should preferably range from 20.000 to 50.000 and more preferably from 25.000 to 40.000.

Still another preferred embodiment of the present invention stipulates that the density of the lower molecular weight component may range from 930 to 980 kg/m$^3$, preferably from 940 to 970 kg/m$^3$, more preferably from 945 to 955 kg/m$^3$ in the case of copolymer and from 940 to 975 kg/m$^3$, preferably from 960 to 972 kg/m$^3$ in the case of homopolymer.

The lower molecular weight component preferably forms from 30 to 70 wt.-% and more preferably 40 to 60 wt.-% of the multimodal terpolymer(s) a2) and/or b2) with the higher molecular weight component forming 70 to 30 wt.-% and preferably 40 to 60% wt.-%.

According to still another preferred embodiment of the present invention the higher molecular weight component of the multimodal polyethylene terpolymer(s) a2) and/or b2) has a lower $MFR_2$ and a lower density than the lower molecular weight component.

Another preferred embodiment stipulates that the higher molecular weight component has an $MFR_2$ of less than 1.0 g/10 min, preferably less than 0.5 g/10 min, more preferably less than 0.2 g/10min.

According to another preferred embodiment of the present invention the higher molecular weight component has a density of less than 915 kg/m$^3$, preferably less than 910 kg/m$^3$ and more preferably less than 905 kg/m$^3$. The Mw of the higher molecular weight component may range from 100,000 to 1,000,000 and preferably from 250,000 to 500,000.

A further preferred embodiment of the present invention stipulates that component(s) a2) and/or b2) are virgin polymers.

Component a3)

Layer A) of the multilayer collation shrink film in accordance with the present invention comprises as component a3) a LDPE.

Preferred embodiments of component a3) will be discussed in the following.

According to one preferred embodiment of the present invention the content of component a3) in layer A) is from 50 to 90 wt.-%, more preferably from 60 to 80 wt.-% and most preferably from 68 to 72 wt.-% based on the overall weight of layer A).

Another preferred embodiment of the present invention stipulates that component a3) is a homopolymer.

According to still another preferred embodiment of the present invention LDPE a3) has a $MFR_2$ in the range from 0.10 to 20 g/10 min, preferably in the range from 0.15 to 5 g/10 min, more preferably in the range from 0.20 to 10 g/10 min, even more preferably in the range from 0.20 to 5 g/10 min, still more preferably in the range from 0.20 to 2.0 g/10 min and most preferable in the range from 0.20 to 0.80 g/10min.

In a further preferred embodiment of the present invention component a) has a density in the range from 905 to 940 kg/m$^3$, preferably in the range from 910 to 937 kg/m$^3$, more preferably in the range from 915 to 935 kg/m$^3$ more preferably in the range from 918 to 925 kg/m$^3$.

Another preferred embodiment of the present invention stipulates that component a3) is a virgin polymer.

Component b1)

Layer B) of the multilayer collation shrink film in accordance with the present invention comprises as component b1) a recycled LDPE.

Preferred embodiments of component b1) will be discussed in the following.

A preferred embodiment in accordance with the present invention stipulates that the content of component b1) in layer B) is from 60 to 95 wt.-%, preferably from 60 to 80 wt.-%, more preferably from 65 to 75 wt.-% and most preferably from 68 to 72 wt.-% based on the overall weight of layer B).

In a further embodiment of the present invention component b1) originates from post consumer waste.

As already mentioned component b1) can comprise up to 20 wt.-% of constituents originating from the first use. Type and amount of these constituents influence the physical properties of component b1). The properties given below refer to the main component.

Still a further preferred embodiment of the present invention stipulates that component b1) has a $MFR_2$ in the range from 0.1 to 10 g/10 min, preferably in the range from 0.2 to 5 g/10 min and more preferably in the range from 0.3 to 0.8 g/ 10 min.

According to a further preferred embodiment of the present invention component b1) has a density in the range from 910 to 945 kg/m$^3$, preferably 910 to 940 kg/m$^3$, more preferably in the range from 915 to 935 kg/m$^3$ and even more preferably in the range from 918 to 925 kg/m$^3$.

In a further preferred embodiment component a1) has a melting point (second melting) in the range from 105 to 115°C, preferably in the range from 107 to 113°C and more preferably in the range from 108 to 112°C.

Recyled LDPE's meeting the requirements of the invention are known and can be bought from suppliers such as Ecoplast, e.g. ecoplast NAV 101.

Multilayer collation shrink film

Preferred embodiments of the multilayer collation shrink film will be discussed in the following.

A preferred embodiment of the present invention stipulates that the multilayer film contains at least 3 layers and preferably consists of 3 layers. It is furthermore preferred that layer B) forms the core layer and is sandwiched by two outer layers A), more preferably both outer layers A) consist of identical components and are most preferably the same. In this context "being the same" means that the outer layers A) consist not only of the same components (amount and chemical composition), but also have the same layer thickness, so that the multilayer film is symmetric.

In one preferred embodiment of the present invention layer A) consists of components a1), a2), a3), optionally one or more of these components can contain additives. The content of component a1) in layer A) is in the range from 5 to 25 wt.-%, more preferably in the range from 10 to 20 wt.-% and most preferably in the range from 14 to 16 wt.-% based on the overall weight of layer A), the content of component a2) in layer A) is in the range from 5 to 25 wt.-%, more preferably in the range from 10 to 20 wt.-% and most preferably in the range from 14 to 16 wt.-% based on the overall weight of layer A) and the content of component a3) in layer A) is in the range from 50 to 90 wt.-%, more preferably in the range from 60 to 80 wt.-% and most preferably in the range from 68 to 72 wt.-% based on the overall weight of layer A), wherein the weight proportions of components (a1) to (a3) add up to 100 wt.-%.

In another preferred embodiment of the present invention layer B) consists of components b1), b2), optionally one or both of these components can contain additives. The content of component b1) in layer B) is from 60 to 80 wt.-%, more preferably from 65 to 75 wt.-% and most preferably from 68 to 72 wt.-% based on the overall weight of layer B); and the content of component b2) in layer B) is from 20 to 40 wt.-%, more preferably from 25 to 35 wt.-% and most preferably from 28 to 32 wt.-% based on the overall weight of layer B), wherein the weight proportions of components (b1) and (b2) add up to 100 wt.-%.

As mentioned above components a1), a2), a3), b1) and b2) may contain additives and/or admixtures.

Additives are preferably selected from the group consisting of slip agents, UV-stabiliser, antioxidants, nucleating agents and mixtures thereof, preferably these additives are contained in an the range from 0 to 5000 ppm, preferably in the range from 10 to 5000 ppm and more preferably in the range from 500 to 3000 ppm based on the overall weight of the respective layer.

Admixtures are preferably selected from the group consisting of pigments, fillers, antiblocking agents and mixtures thereof, preferably these additives are contained in an the range from 0 to 5 wt.-% ppm, preferably in the range from 0 to 3 wt.-%, more preferably in the range from 0 to 2 wt.-% and most preferably from 0 to 1 wt.-% based on the overall weight of the respective layer.

According to still a further preferred embodiment of the present invention the multilayer collation shrink film according to the present invention has a tensile stress at 15 % strain in the range from 7.5 to 17.5 MPa, preferably from 10 to 15 MPa and more preferably from 12 to 13 MPa.

Still another preferred embodiment of the present invention stipulates that the multilayer collation shrink film has a shrinkage in machine direction in the range from 60 to 80 %, preferably from 65 to 75 % and more preferably from 71 to 73 %.

In a further preferred embodiment of the present invention the multilayer collation shrink film has a shrinkage in cross direction in the range from 20 to 30 %, preferably from 22 to 28 % and more preferably from 24 to 26 %.

Another preferred embodiment of the present invention stipulates that the multilayer collation shrink film has a retraction force in the range from 0.5 to 1.5 kg/cm$^2$, preferably from 0.8 to 1.2 kg/cm$^2$ and more preferably from 0.95 to 1.05 kg/cm$^2$.

According to a further preferred embodiment of the present invention the multilayer collation shrink film has a contraction force in the range from 15 to 25 kg/cm$^2$, preferably from 18 to 22 kg/cm$^2$ and more preferably from 19 to 21 kg/cm$^2$.

Still a further preferred embodiment of the present invention stipulates layer A) of the multilayer collation shrink film has a thickness in the range from 2 to 25 μm, preferably from 3 to 15 μm and more preferably from 6 to 9 μm.

According to a further preferred embodiment of the present invention layer B) has a thickness in the range from 10 to 100 μm, preferably from 20 to 80 μm and more preferably from 30 to 40 μm.

In a further embodiment of the present invention the overall film thickness is in the range from 15 to 150 μm, preferably from 25 to 120 μm and more preferably from 30 to 60 μm.

A preferred multilayer collation shrink film consists of a core layer B) sandwiched by two outer layers A), wherein

both outer layers A) consist of

a1) 12 to 18 wt.-% of a multimodal polymer of ethylene with at least two different comonomers selected from alpha-olefins having from 4 to 10 carbon atoms, which multimodal polymer of ethylene has a density in the range from 910 to 935 kg/m$^3$, and a Mw/Mn of 2 to 8;
a2) 12 to 18 wt.-% of a multimodal terpolymer of ethylene and at least two alpha olefin comonomers wherein the multimodal terpolymer has a density in the range from 930 to 940 kg/m$^3$; and
a3) 64 to 76 wt.-% of a LDPE homopolymer being a virgin polymer having a density in the range from 905 to 940 kg/m$^3$ and an MFR$_2$ in the range from 0.1 to 20 g/10 min; and

core layer B) consists of

b1) 65 to 75 wt.-% of recycled LDPE having a MFR$_2$ in the range from 0.1 to 10 g/10 min and a density in the range from 910 to 940 kg/m$^3$; and
b2) 35 to 25 wt.-% of a multimodal terpolymer of ethylene and at least two alpha olefin comonomers wherein the multimodal terpolymer has a density in the range from 930 to 940 kg/m$^3$.

Another preferred multilayer collation shrink film consists of a core layer B) sandwiched by two outer layers A), wherein

both outer layers A) consist of

a1) 12 to 18 wt.-% of a multimodal polymer of ethylene with at least two different comonomers selected from alpha-olefins having from 4 to 10 carbon atoms, which multimodal polymer of ethylene has a density in the range from 910 to 935 kg/m$^3$, and a Mw/Mn of 2 to 8;
a2) 12 to 18 wt.-% of a multimodal terpolymer of ethylene and at least two alpha olefin comonomers wherein the multimodal terpolymer has a density in the range from 930 to 940 kg/m$^3$; and
a3) 64 to 76 wt.-% of a LDPE homopolymer being a virgin polymer having a density in the range from 905 to 940 kg/m$^3$ and an MFR$_2$ in the range from 0.1 to 20 g/10 min; and

core layer B) consists of

b1) 65 to 75 wt.-% of recycled LDPE having a MFR$_2$ in the range from 0.1 to 10 g/10 min and a density in the range from 910 to 940 kg/m$^3$; and
b2) 25 to 35 wt.-% of a multimodal terpolymer of ethylene and at least two alpha olefin comonomers wherein the multimodal terpolymer has a density in the range from 930 to 940 kg/m$^3$.

A further preferred multilayer collation shrink film consists of a core layer B) sandwiched by two outer layers A), wherein

both outer layers A) consist of

a1) 14 to 16 wt.-% of a multimodal polymer of ethylene, comprising an ethylene butene copolymer (i) and an ethylene hexene copolymer (ii), where butene/hexene are the only comonomers present in the respective component, having from 4 to 10 carbon atoms, which multimodal polymer of ethylene has a density in the range from 910 to 935 kg/m$^3$, and a Mw/Mn of 2 to 8;
a2) 14 to 16 wt.-% of a multimodal terpolymer of ethylene comprising (i) a lower molecular weight fraction being a polyethylene homopolymer; and (ii) a higher molecular weight fraction being a terpolymer of ethylene and at least two alpha olefin comonomers having 4 to 10 carbon atoms; wherein the multimodal terpolymer has a density in the range from 930 to 940 kg/m$^3$; and
a3) 68 to 72 wt.-% of a LDPE homopolymer being a virgin polymer having a density in the range from 905 to 940 kg/m$^3$ and an MFR$_2$ in the range from 0.1 to 20 g/10 min; and

core layer B) consists of

b1) 68 to 72 wt.-% of recycled LDPE having a MFR$_2$ in the range from 0.1 to 10 g/10 min and a density in the range from 910 to 940 kg/m$^3$; and
b2) 28 to 32 wt.-% of a multimodal terpolymer of ethylene comprising (i) a lower molecular weight fraction being a polyethylene homopolymer; and (ii) a higher molecular weight fraction being a terpolymer of ethylene and at least two alpha olefin comonomers having 4 to 10 carbon atoms; wherein the multimodal terpolymer has a density in the range from 930 to 940 kg/m$^3$.

A further preferred multilayer collation shrink film consists of a core layer B) sandwiched by two outer layers A), wherein

both outer layers A) consist of

a1) 14 to 16 wt.-% of a multimodal polymer of ethylene, comprising an ethylene butene copolymer (i) and an ethylene hexene copolymer (ii), where butene/hexene are the only comonomers present in the respective component, having from 4 to 10 carbon atoms, which multimodal polymer of ethylene has a density in the range from 910 to 935 kg/m$^3$, and a Mw/Mn of 2 to 8;
a2) 14 to 16 wt.-% of a multimodal terpolymer of ethylene comprising (i) a lower molecular weight fraction being a polyethylene homopolymer; and (ii) a higher molecular weight fraction being a terpolymer of ethylene and at least two alpha olefin comonomers having 4 to 10 carbon atoms; wherein the multimodal terpolymer has a density in the range from 930 to 940 kg/m$^3$; and
a3) 68 to 72 wt.-% of a LDPE homopolymer being a virgin polymer having a density in the range from 905 to 940 kg/m$^3$ and an MFR$_2$ in the range from 0.1 to 20 g/10 min; and

core layer B) consists of

b1) 68 to 72 wt.-% of recycled LDPE having a MFR$_2$ in the range from 0.1 to 10 g/10 min and a density in the range from 910 to 940 kg/m$^3$; and
b2) 28 to 32 wt.-% of a multimodal terpolymer of ethylene comprising (i) a lower molecular weight fraction being a polyethylene homopolymer; and (ii) a higher molecular weight fraction being a terpolymer of ethylene and at least two alpha olefin comonomers having 4 to 10 carbon atoms; wherein the multimodal terpolymer has a density in the range from 930 to 940 kg/m$^3$.

Method for manufacturing the multilayer collation shrink film

The present invention further relates to a method for manufacturing the multilayer collation shrink film according to the present invention. According to one preferred embodiment the multilayer collation shrink film is manufactured by a one-step blown film coextrusion process.

Use of the multilayer collation shrink film

The film according to the present invention can be used for secondary packaging, preferably for bottles and cans more preferably bottles and cans in the field of household products, food, healthcare products, beverage products and bottles.

Use of the multimodal terpolymer b2)

The present invention further refers to the use of the multimodal terpolymer b2) as defined above for improving the mechanical properties and shrink behaviour of a multilayer film.
In accordance with the present invention the mechanical properties and shrink behaviour of the multilayer collation shrink film can be improved by incorporation of 20 to 40 wt.-% and preferably of 25 to 35 wt.-% of the multimodal terpolymer b2) in a layer of a multilayer collation shrink film comprising in the same layer at least 50 wt.-%, preferably 60 to 80 wt.-% and more preferably 65 to 75 wt.-% of recycled LDPE b1) as defined above, wherein the weight indications are based on the overall weight of the layer comprising b1) and b2).
In a preferred embodiment of the present invention the multimodal terpolymer b2) is used in a symmetrical film having the layer sequence A/B/A.

Monolayer film

In addition, a monolayer film comprising components b1) and b2) as defined above is described herein. Said film can be produced by a step blown film extrusion processes.

According to a further preferred embodiment of the present invention the monolayer film has a thickness in the range from 10 to 100 $\mu$m, preferably in the range from 20 to 80 $\mu$m and more preferably from 30 to 40 $\mu$m.

A preferred monolayer film consists of components b1) and b2) and more preferably consists of

b1) 55 to 95 wt.-%, preferably from 65 to 75 wt.-% and more preferably from 68 to 70 wt.-% of recycled LDPE having a $MFR_2$ in the range from 0.1 to 10 g/10 min and a density in the range from 910 to 940 kg/m$^3$; and
b2) 45 to 5 wt.-%, preferably from 35 to 25 wt.-% and more preferably from 32 to 30 wt.-% of a multimodal terpolymer of ethylene and at least two alpha olefin comonomers wherein the multimodal terpolymer has a density in the range from 930 to 940 kg/m$^3$.

A further preferred monolayer film consists of

b1) 68 to 72 wt.-% of recycled LDPE having a $MFR_2$ in the range from 0.1 to 10 g/10 min and a density in the range from 910 to 940 kg/m$^3$; and
b2) 28 to 32 wt.-% of a multimodal terpolymer of ethylene comprising (i) a lower molecular weight fraction being a polyethylene homopolymer; and (ii) a higher molecular weight fraction being a terpolymer of ethylene and at least two alpha olefin comonomers having 4 to 10 carbon atoms; wherein the multimodal terpolymer has a density in the range from 930 to 940 kg/m$^3$.

The invention will now be described with reference to the following non-limiting examples.

**Experimental Part**

**A) Methods**

Tensile Stress

Tensile tests were performed on an Instron apparatus according to ISO 527-3.

Shrinkage

Determination of shrinkage was performed in oil according to ISO 14616.

50mm x 50mm samples are placed in oil (Polydimethylsiloxan) at 135°C for 20 seconds. After this the samples are removed, and conditioned at room temperature for 1 hour. Finally the shrinkage, i.e. change in dimension is measured. Shrinkage values are calculated as:

$$\text{Shrinkage} = (Lo - Lm) * 100/Lo$$

wherein Lo is the original length (i.e. 100 mm), and Lm is the length measured after thermal exposure. If the measured value increases (e.g. in the TD direction), then shrinkage is negative.

Contraction stress

The retraction force and contraction force were determined according to ISO 14616 using a shrinkage film tester (Retratech) at 120°C and a residence time in the oven for 25 seconds.

**B) Materials used**

**FX1002:** multimodal alpha olefin terpolymer commercially available by Borealis AG, density 937 kg/m$^3$ (determined according to ISO 1183), Melt Flow Rate (190 °C/5 kg) of 2.0 g/10min and a Melt Flow Rate (190°C/21 kg) of 42 g/10min (according to ISO 1133).

**FK1820:** Anteo™ FK1820 is a bimodal terpolymer commercially available by Borealis AG, density 918 kg/m$^3$ (determined according to ASTM D792), Melt Flow Rate (190 °C/2.16 kg) of 1.50 g/10min.

**LDPE:** low density polyethylene, grade FT3200 available by Borealis.

FB1350: Borstar® FB1350 is a linear medium density polyethylene, density 935 kg/m$^3$ (determined according to ISO1183), Melt Flow Rate (190 °C/21.6 kg) of 15.0 g/10min.

**NAV 101:** recycled LDPE, commercially available by Ecoplast under the tradename Ecoplast NAV 101, density:

0.920±0.005 g/cm³ (determined according to ISO 1183), Melt Flow Rate (190 °C/2.16 kg) of 0.5±0.2 g/10min, origin: household and commercial waste collection.

## C) Film preparation

The films were produced on a commercial scale 3-layer extrusion blown film line with three extruders (extruder temperature setting 190 to 210°C, die diameter 350 mm, blow up ratio (BUR) 1:3, die gap 1.5 mm, with internal bubble cooling).

The distribution for the ABA films was 15%/70%/15% and the overall film thickness was 50 μm for Inventive Example 1 and 45 μm for Inventive Example 2 and Comparative Example 1.

## D) Results

The film according to Inventive Example 1 has the following composition.

Layer A: 15 wt.-% FK1820, 15 wt.-% FX1002 and 70 wt.-% LDPE
Layer B: 70 wt.-% NAV 101, 30 wt.-% FX1002
Layer sequence: A/B/A
Layer thickness: A: 7.5 μm B: 35 μm

The film according to Inventive Example 2 has the following composition.

Layer A: 70 wt.-% FK1820, 10 wt.-% FX1002, 20 wt.-% LDPE

Layer B: 70 wt.-% NAV 101, 30 wt.-% FX1002

Layer sequence: A/B/A

Layer thickness: A: 6.75 μm B: 31.5 μm

The film according to Comparative Example 1 has the following composition.

Layer A: 80 wt.-% FK1820, 20 wt.-% LDPE

Layer B: 70 wt.-% LDPE, 30 wt.-% FB1350

Below Table 1 summarizes the mechanical data measured for above films.

**Table 1:** Film properties.

| Sample | Retraction force [kg/cm²] | Contraction force [kg/cm²] | Tensile Stress [MPa] | Shrinkage MDᵃ [%] | Shrinkage CDᵇ [%] |
|---|---|---|---|---|---|
| Inventive Example 1 | 1.00 | 20.1 | 12.5 | 72 | 25 |
| Inventive Example 2 | 0.78 | 21.3 | 24.5 | 82 | 18.7 |
| Comparative Example 1 | 0.75 | 22.4 | 22.5 | 77 | 8.3 |
| a) machine direction; b) cross direction. | | | | | |

## Claims

1. A multilayer collation shrink film comprising at least the following layers:

A) a layer comprising at least the following components:

a1) a multimodal polymer of ethylene with at least two different comonomers selected from alpha-olefins having from 4 to 10 carbon atoms, which multimodal polymer of ethylene has a density in the range from 910 to 935 kg/m$^3$, and a Mw/Mn of 2 to 8;

a2) a multimodal terpolymer of ethylene and two alpha olefin comonomers wherein the multimodal terpolymer has a density in the range from 930 to 950 kg/m$^3$ and a Mw/Mn of 10 to 20; and

a3) LDPE;

B) a layer comprising at least the following components:

b1) recycled LDPE; and

b2) a multimodal terpolymer of ethylene and two alpha olefin comonomers wherein the multimodal terpolymer has a density in the range from 930 to 950 kg/m$^3$ and a Mw/Mn of 10 to 20.

2. The multilayer collation shrink film according to claim 1, **characterized in that**, the multilayer film contains at least 3 layers, preferably consists of 3 layers wherein more preferably layer B) forms the core layer and is sandwiched by two outer layers A), more preferably both outer layers A) consist of identical components and most preferably are the same.

3. The multilayer collation shrink film according to any one of the preceding claims, **characterized in that**,

the content of component a1) in layer A) is in the range from 5 to 25 wt.-%, more preferably in the range from 10 to 20 wt.-% and most preferably in the range from 14 to 16 wt.-% based on the overall weight of layer A); and/or the content of component a2) in layer A) is in the range from 5 to 25 wt.-%, more preferably in the range from 10 to 20 wt.-% and most preferably in the range from 14 to 16 wt.-% based on the overall weight of layer A); and/or the content of component a3) in layer A) is in the range from 50 to 90 wt.-%, more preferably in the range from 60 to 80 wt.-% and most preferably in the range from 68 to 72 wt.-% based on the overall weight of layer A); wherein the weight proportions of components (a1) to (a3) add up to 100 wt.-%.

4. The multilayer collation shrink film according to any one of the preceding claims, **characterized in that**,

the content of component b1) in layer B) is in the range from 60 to 95 wt.-%, more preferably in the range from 65 to 75 wt.-% and most preferably in the range from 68 to 72 wt.-% based on the overall weight of layer B); and/or the content of component b2) in layer B) is in the range from 5 to 40 wt.-%, more preferably in the range from 25 to 35 wt.-% and most preferably in the range from 28 to 32 wt.-% based on the overall weight of layer B); wherein the weight proportions of components (b1) and (b2) add up to 100 wt.-%.

5. The multilayer collation shrink film according to any one of the preceding claims, **characterized in that**,

the components according to layer A) and/or B) comprise additives, preferably selected from the group consisting of slip agents, UV-stabiliser, pigments, antioxidants, nucleating agents and mixtures thereof, preferably these additives are contained in an amount from 0 to 5000 ppm, preferably from 10 to 5000 ppm and more preferably from 500 to 3000 ppm based on the overall weight of the respective layer; and/or the components according to layer A) and/or B) comprise admixtures, preferably selected from the group consisting of pigments, fillers, antiblocking agents and mixtures thereof, preferably these admixtures are contained in an the range from 0 to 5 wt.-%, preferably in the range from 0 to 3 wt.-%, more preferably in the range from 0 to 2 wt.-% and most preferably from 0 to 1 wt.-% based on the overall weight of the respective layer.

6. The multilayer collation shrink film according to any one of the preceding claims, **characterized in that**, layer A) consists of components a1) to a3) and these component optionally contain additives and/or layer B) consists of components b1) to b2) and these components optionally contain additives.

7. The multilayer collation shrink film according to any one of the preceding claims, **characterized in that**, component a1) has one or more of the following technical features:

$MFR_2$ of 0.5 to 10 g/10 min (according to ISO 1133 at 190°C under 2.16 kg load);
$MFR_{21}/MFR_2$ of 13 to 35 ($MFR_{21}$ at 190°C under 21.6 kg load);
MWD in the range from 2 to 7, preferably in the range from 2 to 5.

8. The multilayer collation shrink film according to any one of the preceding claims, **characterized in that**, component a1) comprises 1-butene and 1-hexene, preferably is a terpolymer comprising an ethylene butene copolymer (i) and an ethylene hexene copolymer (ii), more preferably comprises an ethylene butene copolymer (i) and an ethylene hexene copolymer (ii) where butene/hexene are the only comonomers present in the respective component.

9. The multilayer collation shrink film according to any one of the preceding claims, **characterized in that**, component a2) and/or b2) has one or more of the following technical features:

the two alpha olefin comonomers are C4 to 10 alpha olefins;
the multimodal terpolymer has an $MFR_{21}$ of 5.0 to 200 g/10 min determined according to ISO 1133;
the multimodal terpolymer comprises

i. a lower molecular weight fraction being a polyethylene homopolymer and
ii. a higher molecular weight fraction being a terpolymer of ethylene and two alpha olefin comonomers having 4 to 10 carbon atoms;

the multimodal terpolymer has $MFR_{21}$ in the range of 15.0 to 50.0 g/10 min;
the FRR21/5 of the multimodal terpolymer is in the range from 10.0 to 50.0;
Mw/Mn is in the range from 14 to 18 and preferably from 15 to 16.5;
the density in the range from 930 to 940 kg/m$^3$ and the Mw/Mn in the range of 10 to 20;
preferably components a2) and b2) are identical.

10. The multilayer collation shrink film according to any one of the preceding claims, **characterized in that**, component a3)

is a homopolymer; and/or
is a virgin polymer; and/or
has a $MFR_2$ in the range from 0.10 to 20 g/10 min, preferably in the range from 0.15 to 5 g/10 min, more preferably in the range from 0.20 to 5 g/10 min and most preferably in the range from 0.20 to 2.0 g/10 min; and/or
has a density in the range from 905 to 940 kg/m$^3$, preferably in the range from 910 to 937 kg/m$^3$, more preferably in the range from 915 to 935 kg/m$^3$ and most preferably in the range from 918 to 925 kg/m$^3$.

11. The multilayer collation shrink film according to any one of the preceding claims, wherein component b1)

• originates from post consumer waste; and/or
• has a $MFR_2$ in the range from 0.1 to 10 g/10 min, preferably in the range from 0.2 to 5 g/10 min and more preferably in the range from 0.3 to 0.8 g/ 10 min; and/or
• a density in the range from 910 to 945 kg/m$^3$, preferably in the range from 910 to 940 kg/m$^3$, more preferably in the range from 915 to 935 kg/m$^3$ and most preferably in the range from 918 to 925 kg/m$^3$.

12. The multilayer collation shrink film according to any one of the preceding claims, **characterized in that**, the film has one or more of the following properties:

a tensile stress at 15 % strain, determined according to ISO 527-3, in the range from 7.5 to 17.5 MPa, preferably from 10 to 15 MPa and more preferably from 12 to 13 MPa; and/or
a shrinkage in machine direction, determined according to ISO 14616, in the range from 60 to 80 %, preferably from 65 to 75 % and more preferably from 71 to 73 %; and/or
a shrinkage in cross direction, determined according to ISO 14616, in the range from 20 to 30 %, preferably from 22 to 28 % and more preferably from 24 to 26 %; and/or a retraction force, determined according to ISO 14616, in the range from 0.5 to 1.5 kg/cm$^2$, preferably from 0.8 to 1.2 kg/cm$^2$ and more preferably from 0.95 to 1.05 kg/cm$^2$; and/or
a contraction force, determined according to ISO 14616, in the range from 15 to 25 kg/cm$^2$, preferably from 18 to 22 kg/cm$^2$ and more preferably from 19 to 21 kg/cm$^2$; and/or
layer A) has a thickness in the range from 2 to 25 $\mu$m, preferably from 3 to 15 $\mu$m and more preferably from 6 to 9 $\mu$m; and/or
layer B) has a thickness in the range from 10 to 100 $\mu$m, preferably from 20 to 80 $\mu$m and more preferably from 30 to 40 $\mu$m; and/or
the overall film thickness is in the range from 15 to 150 $\mu$m, preferably from 25 to 120 $\mu$m and more preferably from 30 to 60 $\mu$m.

13. The multilayer collation shrink film according to any one of the preceding claims, **characterized in that**, the film consists of a core layer B) sandwiched by two outer layers A), wherein

both outer layers A) consist of

a1) 12 to 18 wt.-% of a multimodal polymer of ethylene with at least two different comonomers selected from alpha-olefins having from 4 to 10 carbon atoms, which multimodal polymer of ethylene has a density in the range from 910 to 935 kg/m$^3$, and a Mw/Mn of 2 to 8;
a2) 12 to 18 wt.-% of a multimodal terpolymer of ethylene and two alpha olefin comonomers wherein the multimodal terpolymer has a density in the range from 930 to 940 kg/m$^3$; and
a3) 64 to 76 wt.-% of a LDPE homopolymer being a virgin polymer having a density in the range from 905 to 940 kg/m$^3$ and an MFR$_2$ in the range from 0.1 to 20 g/10 min; and

core layer B) consists of
b1) 65 to 75 wt.-% of recycled LDPE having a MFR$_2$ in the range from 0.1 to 10 g/10 min and a density in the range from 910 to 940 kg/m$^3$; and
b2) 35 to 25 wt.-% of a multimodal terpolymer of ethylene and two alpha olefin comonomers wherein the multimodal terpolymer has a density in the range from 930 to 940 kg/m$^3$.

14. A method for manufacturing a film according to any one of claims 1 to 13, **characterized in that**, the film is manufactured by a one-step blown film coextrusion process.

15. Use of a film according to any one of claims 1 to 13 for secondary packaging, preferably for bottles and cans more preferably bottles and cans in the field of

• household products;
• food;
• healthcare products;
• beverage products;
• bottles.

16. Use of 20 to 40 wt.-%, preferably 25 to 35 wt.-% of a multimodal terpolymer b2) as defined in claims 1 and 9 in a layer of a multilayer collation shrink film comprising in the same layer at least 50 wt.-%, preferably 60 to 80 wt.-% and more preferably 65 to 75 wt.-% of recycled LDPE b1) as defined in claims 1 and 11, based on the overall weight of the film for improving the mechanical properties and shrink behaviour of the multilayer film, wherein the weight indications are based on the overall weight of the layer comprising b1) and b2).

**Patentansprüche**

1. Eine mehrschichtige Kollationsschrumpffolie, die mindestens die folgenden Schichten umfasst:

A) eine Schicht, die mindestens die folgenden Bestandteile enthält:

a1) ein multimodales Polymer von Ethylen mit mindestens zwei verschiedenen Comonomeren, ausgewählt aus Alpha-Olefinen mit 4 bis 10 Kohlenstoffatomen, wobei das multimodale Polymer von Ethylen eine Dichte im Bereich von 910 bis 935 kg/m$^3$ und ein Mw/Mn von 2 bis 8 aufweist;
a2) ein multimodales Terpolymer aus Ethylen und zwei Alpha-Olefin-Comonomeren, wobei das multimodale Terpolymer eine Dichte im Bereich von 930 bis 950 kg/m$^3$ und ein Mw/Mn von 10 bis 20 aufweist; und
a3) LDPE;

B) eine Schicht, die mindestens die folgenden Bestandteile enthält:

b1) recyceltes LDPE; und
b2) ein multimodales Terpolymer aus Ethylen und zwei Alpha-Olefin-Comonomeren, wobei das multimodale Terpolymer eine Dichte im Bereich von 930 bis 950 kg/m$^3$ und ein Mw/Mn von 10 bis 20 aufweist.

2. Mehrschichtige Kollationsschrumpffolie gemäß Anspruch 1, **dadurch gekennzeichnet, dass** die mehrschichtige Folie mindestens 3 Schichten enthält, vorzugsweise aus 3 Schichten besteht, wobei besonders bevorzugt die Schicht B) die Kernschicht bildet und von zwei Außenschichten A) umschlossen ist, besonders bevorzugt beide Außenschichten A) aus gleichen Komponenten bestehen und besonders bevorzugt gleich sind.

3. Mehrschichtige Kollationsschrumpffolie gemäß einem der vorhergehenden Ansprüche, **dadurch gekennzeichnet, dass**,

der Gehalt der Komponente a1) in der Schicht A) im Bereich von 5 bis 25 Gew.-%, stärker bevorzugt im Bereich von 10 bis 20 Gew.-% und am stärksten bevorzugt im Bereich von 14 bis 16 Gew.-%, bezogen auf das Gesamtgewicht der Schicht A), liegt; und/oder
der Gehalt der Komponente a2) in der Schicht A) im Bereich von 5 bis 25 Gew.-%, stärker bevorzugt im Bereich von 10 bis 20 Gew.-% und am stärksten bevorzugt im Bereich von 14 bis 16 Gew.-%, bezogen auf das Gesamtgewicht der Schicht A), liegt; und/oder
der Gehalt der Komponente a3) in der Schicht A) im Bereich von 50 bis 90 Gew.-%, stärker bevorzugt im Bereich von 60 bis 80 Gew.-% und am stärksten bevorzugt im Bereich von 68 bis 72 Gew.-%, bezogen auf das Gesamtgewicht der Schicht A), liegt; wobei sich die Gewichtsanteile der Komponenten (a1) bis (a3) auf 100 Gew.-% addieren.

4. Mehrschichtige Kollationsschrumpffolie gemäß einem der vorhergehenden Ansprüche, **dadurch gekennzeichnet, dass**,

der Gehalt der Komponente b1) in der Schicht B) im Bereich von 60 bis 95 Gew.-%, stärker bevorzugt im Bereich von 65 bis 75 Gew.-% und am stärksten bevorzugt im Bereich von 68 bis 72 Gew.-%, bezogen auf das Gesamtgewicht der Schicht B), liegt; und/oder
der Gehalt der Komponente b2) in der Schicht B) im Bereich von 5 bis 40 Gew.-%, stärker bevorzugt im Bereich von 25 bis 35 Gew.-% und am stärksten bevorzugt im Bereich von 28 bis 32 Gew.-%, bezogen auf das Gesamtgewicht der Schicht B), liegt; wobei sich die Gewichtsanteile der Komponenten (b1) und (b2) auf 100 Gew.-% addieren.

5. Mehrschichtige Kollationsschrumpffolie gemäß einem der vorhergehenden Ansprüche, **dadurch gekennzeichnet, dass**,

die Komponenten gemäß Schicht A) und/oder B) Additive umfassen, vorzugsweise ausgewählt aus der Gruppe bestehend aus Gleitmitteln, UV-Stabilisatoren, Pigmenten, Antioxidantien, Nukleierungsmitteln und Mischungen davon, wobei diese Additive vorzugsweise in einer Menge von 0 bis 5000 ppm, vorzugsweise von 10 bis 5000 ppm und besonders bevorzugt von 500 bis 3000 ppm, bezogen auf das Gesamtgewicht der jeweiligen Schicht, enthalten sind; und/oder
die Komponenten gemäß Schicht A) und/oder B) Zusatzstoffe enthalten, vorzugsweise ausgewählt aus der Gruppe bestehend aus Pigmenten, Füllstoffen, Antiblockmitteln und deren Mischungen, wobei diese Zusatzstoffe vorzugsweise im Bereich von 0 bis 5 Gew.-%, vorzugsweise im Bereich von 0 bis 3 Gew.-%, stärker bevorzugt im Bereich von 0 bis 2 Gew.-% und am stärksten bevorzugt von 0 bis 1 Gew.-%, bezogen auf das Gesamtgewicht der jeweiligen Schicht, enthalten sind.

6. Mehrschichtige Kollationsschrumpffolie gemäß einem der vorhergehenden Ansprüche, **dadurch gekennzeichnet, dass** die Schicht A) aus den Komponenten a1) bis a3) besteht und diese Komponenten gegebenenfalls Additive enthalten und/oder die Schicht B) aus den Komponenten b1) bis b2) besteht und diese Komponenten gegebenenfalls Additive enthalten.

7. Mehrschichtige Kollationsschrumpffolie gemäß einem der vorhergehenden Ansprüche, **dadurch gekennzeichnet, dass** die Komponente a1) eines oder mehrere der folgenden technischen Merkmale aufweist:

$MFR_2$ von 0,5 bis 10 g/10 min (nach ISO 1133 bei 190°C unter 2,16 kg Last);
$MFR_{21}/MFR_2$ von 13 bis 35 ($MFR_{21}$ bei 190°C unter 21,6 kg Last);
MWD im Bereich von 2 bis 7, vorzugsweise im Bereich von 2 bis 5.

8. Mehrschichtige Kollationsschrumpffolie gemäß einem der vorhergehenden Ansprüche, **dadurch gekennzeichnet, dass** die Komponente a1) 1-Buten und 1-Hexen umfasst, vorzugsweise ein Terpolymer ist, das ein Ethylen-Buten-Copolymer (i) und ein Ethylen-Hexen-Copolymer (ii) umfasst, stärker bevorzugter ein Ethylen-Buten-Copolymer (i)

**EP 3 953 174 B1**

und ein Ethylen-Hexen-Copolymer (ii) umfasst , wobei Buten/Hexen die einzigen in der jeweiligen Komponente vorhandenen Comonomere sind.

9. Mehrschichtige Kollationsschrumpffolie gemäß einem der vorhergehenden Ansprüche, **dadurch gekennzeichnet, dass** die Komponente a2) und/oder b2) eines oder mehrere der folgenden technischen Merkmale aufweist:

die beiden Alpha-Olefin-Comonomere sind C4- bis 10-Alpha-Olefine;
das multimodale Terpolymer hat einen $MFR_{21}$ von 5,0 bis 200 g/10 min, bestimmt nach ISO 1133;
das multimodale Terpolymer umfasst

i. eine Fraktion mit geringerem Molekulargewicht, die ein Polyethylen-Homopolymer ist, und
ii. eine Fraktion mit höherem Molekulargewicht, die ein Terpolymer aus Ethylen und zwei Alpha-Olefin-Comonomeren mit 4 bis 10 Kohlenstoffatomen ist;

das multimodale Terpolymer einen $MFR_{21}$ im Bereich von 15,0 bis 50,0 g/10 min aufweist;
der FRR21/5 des multimodalen Terpolymers im Bereich von 10,0 bis 50,0 liegt;
Mw/Mn im Bereich von 14 bis 18 und vorzugsweise von 15 bis 16,5 liegt;
die Dichte im Bereich von 930 bis 940 kg/m$^3$ und das Mw/Mn im Bereich von 10 bis 20 liegt;
vorzugsweise die Komponenten a2) und b2) identisch sind.

10. Mehrschichtige Kollationsschrumpffolie gemäß einem der vorhergehenden Ansprüche, **dadurch gekennzeichnet, dass** die Komponente a3)

ein Homopolymer ist; und/oder
ein junges Polymer ist; und/oder
eine $MFR_2$ im Bereich von 0,10 bis 20 g/10 min, vorzugsweise im Bereich von 0,15 bis 5 g/10 min, noch bevorzugter im Bereich von 0,20 bis 5 g/10 min und am meisten bevorzugt im Bereich von 0,20 bis 2,0 g/10 min aufweist; und/oder eine Dichte im Bereich von 905 bis 940 kg/m$^3$, vorzugsweise im Bereich von 910 bis 937 kg/m$^3$, noch bevorzugter im Bereich von 915 bis 935 kg/m$^3$ und am meisten bevorzugt im Bereich von 918 bis 925 kg/m$^3$ aufweist.

11. Mehrschichtige Kollationsschrumpffolie gemäß einem der vorhergehenden Ansprüche, wobei die Komponente b1)

• aus Post-Consumer-Abfällen stammt; und/oder
• eine $MFR_2$ im Bereich von 0,1 bis 10 g/10 min, vorzugsweise im Bereich von 0,2 bis 5 g/10 min und besonders bevorzugt im Bereich von 0,3 bis 0,8 g/10 min aufweist; und/oder
• eine Dichte im Bereich von 910 bis 945 kg/m$^3$, vorzugsweise im Bereich von 910 bis 940 kg/m$^3$, noch bevorzugter im Bereich von 915 bis 935 kg/m$^3$ und am meisten bevorzugt im Bereich von 918 bis 925 kg/m$^3$ aufweist.

12. Mehrschichtige Kollationsschrumpffolie gemäß einem der vorhergehenden Ansprüche, **dadurch gekennzeichnet, dass** die Folie eine oder mehrere der folgenden Eigenschaften aufweist:

eine Zugspannung bei 15 % Dehnung, bestimmt nach ISO 527-3, im Bereich von 7,5 bis 17,5 MPa, vorzugsweise von 10 bis 15 MPa und besonders bevorzugt von 12 bis 13 MPa; und/oder
eine Schrumpfung in Maschinenrichtung, bestimmt nach ISO 14616, im Bereich von 60 bis 80 %, vorzugsweise von 65 bis 75 % und besonders bevorzugt von 71 bis 73 %; und/oder
eine Schrumpfung in Querrichtung, bestimmt nach ISO 14616, im Bereich von 20 bis 30 %, vorzugsweise von 22 bis 28 % und besonders bevorzugt von 24 bis 26 %; und/oder
eine Rückzugskraft, bestimmt nach ISO 14616, im Bereich von 0,5 bis 1,5 kg/cm$^2$, vorzugsweise von 0,8 bis 1,2 kg/cm$^2$ und besonders bevorzugt von 0,95 bis 1,05 kg/cm$^2$; und/oder
eine Kontraktionskraft nach ISO 14616 bestimmte im Bereich von 15 bis 25 kg/cm$^2$, vorzugsweise von 18 bis 22 kg/cm$^2$ und besonders bevorzugt von 19 bis 21 kg/cm$^2$; und/oder
Schicht A) eine Dicke im Bereich von 2 bis 25 $\mu$m, vorzugsweise von 3 bis 15 $\mu$m und besonders bevorzugt von 6 bis 9 $\mu$m aufweist; und/oder
Schicht B) eine Dicke im Bereich von 10 bis 100 $\mu$m, vorzugsweise von 20 bis 80 $\mu$m und besonders bevorzugt von 30 bis 40 $\mu$m aufweist; und/oder die Gesamtschichtdicke im Bereich von 15 bis 150 $\mu$m, vorzugsweise von 25 bis 120 $\mu$m und noch bevorzugter von 30 bis 60 $\mu$m liegt.

13. Mehrschichtige Kollationsschrumpffolie gemäß einem der vorhergehenden Ansprüche, **dadurch gekennzeichnet, dass** die Folie aus einer Kernschicht B) besteht, die von zwei Außenschichten A) umschlossen ist, wobei

beide äußeren Schichten A) bestehen aus

a1) 12 bis 18 Gew.-% eines multimodalen Polymers von Ethylen mit mindestens zwei verschiedenen Comonomeren, ausgewählt aus Alpha-Olefinen mit 4 bis 10 Kohlenstoffatomen, wobei das multimodale Polymer von Ethylen eine Dichte im Bereich von 910 bis 935 kg/m$^3$ und ein Mw/Mn von 2 bis 8 aufweist;
a2) 12 bis 18 Gew.-% eines multimodalen Terpolymers aus Ethylen und zwei Alpha-Olefin-Comonomeren, wobei das multimodale Terpolymer eine Dichte im Bereich von 930 bis 940 kg/m$^3$ aufweist; und
a3) 64 bis 76 Gew.-% eines LDPE-Homopolymers, bei dem es sich um ein junges Polymer mit einer Dichte im Bereich von 905 bis 940 kg/m$^3$ und einer MFR$_2$ im Bereich von 0,1 bis 20 g/10 min handelt; und

Kernschicht B) besteht aus

b1) 65 bis 75 Gew.-% an recyceltem LDPE mit einer MFR$_2$ im Bereich von 0,1 bis 10 g/10 min und einer Dichte im Bereich von 910 bis 940 kg/m$^3$; und
b2) 35 bis 25 Gew.-% eines multimodalen Terpolymers aus Ethylen und zwei Alpha-Olefin-Comonomeren, wobei das multimodale Terpolymer eine Dichte im Bereich von 930 bis 940 kg/m$^3$ aufweist.

14. Verfahren zur Herstellung einer Folie nach einem der Ansprüche 1 bis 13, **dadurch gekennzeichnet, dass** die Folie in einem einstufigen Blasfolien-Coextrusionsverfahren hergestellt wird.

15. Verwendung einer Folie nach einem der Ansprüche 1 bis 13 für Sekundärverpackungen, vorzugsweise für Flaschen und Dosen, besonders bevorzugt für Flaschen und Dosen im Bereich der

- Haushaltsprodukte;
- Essen;
- Gesundheitsprodukte;
- Getränkeprodukte;
- Flaschen.

16. Verwendung von 20 bis 40 Gew.-%, vorzugsweise 25 bis 35 Gew.-% eines multimodalen Terpolymers b2) gemäß den Ansprüchen 1 und 9 in einer Schicht einer mehrschichtigen Kollationsschrumpffolie, die in derselben Schicht mindestens 50 Gew.-%, vorzugsweise 60 bis 80 Gew.-% und besonders bevorzugt 65 bis 75 Gew.-% recyceltes LDPE b1) wie in den Ansprüchen 1 und 11 definiert, bezogen auf das Gesamtgewicht der Folie zur Verbesserung der mechanischen Eigenschaften und des Schrumpfverhaltens der Mehrschichtfolie, wobei die Gewichtsangaben auf das Gesamtgewicht der b1) und b2) umfassenden Schicht bezogen sind.

**Revendications**

1. Film multicouche rétractable de regroupement comprenant au moins les couches suivantes :

A) une couche comprenant au moins les composants suivants :

a1) un polymère multimodal d'éthylène avec au moins deux comonomères différents sélectionnés parmi les alpha-oléfines ayant de 4 à 10 atomes de carbone, ce polymère multimodal d'éthylène présentant une masse volumique dans la plage de 910 à 935 kg/m$^3$, et un Mw/Mn de 2 à 8 ;
a2) un terpolymère multimodal d'éthylène et de deux comonomères d'alpha-oléfine dans lequel le terpolymère multimodal présente une masse volumique dans la plage de 930 à 950 kg/m$^3$ et un Mw/Mn de 10 à 20 ; et
a3) un LDPE ;

B) une couche comprenant au moins les composants suivants :

b1) un LDPE recyclé ; et
b2) un terpolymère multimodal d'éthylène et de deux comonomères d'alpha-oléfine dans lequel le terpolymère multimodal présente une masse volumique dans la plage de 930 à 950 kg/m$^3$ et un Mw/Mn de 10 à 20.

2. Film multicouche rétractable de regroupement selon la revendication 1, **caractérisé en ce que** le film multicouche contient au moins 3 couches, de préférence est constitué de 3 couches, dans lequel de manière davantage préférée la couche B) forme la couche centrale et est prise en sandwich par deux couches A) externes, de manière davantage préférée les deux couches A) externes sont constituées de composants identiques et de manière préférée entre toutes sont identiques.

3. Film multicouche rétractable de regroupement selon l'une des revendications précédentes, **caractérisé en ce que**

la teneur en composant a1) dans la couche A) est dans la plage de 5 à 25 % en poids, de manière davantage préférée dans la plage de 10 à 20 % en poids et de manière préférée entre toutes dans la plage de 14 à 16 % en poids sur la base du poids total de la couche A) ; et/ou
la teneur en composant a2) dans la couche A) est dans la plage de 5 à 25 % en poids, de manière davantage préférée dans la plage de 10 à 20 % en poids et de manière préférée entre toutes dans la plage de 14 à 16 % en poids sur la base du poids total de la couche A) ; et/ou
la teneur en composant a3) dans la couche A) est dans la plage de 50 à 90 % en poids, de manière davantage préférée dans la plage de 60 à 80 % en poids et de manière préférée entre toutes dans la plage de 68 à 72 % en poids sur la base du poids total de la couche A) ;
dans lequel les proportions en poids des composants (a1) à (a3) totalisent 100 % en poids.

4. Film multicouche rétractable de regroupement selon l'une des revendications précédentes, **caractérisé en ce que**

la teneur en composant b1) dans la couche B) est dans la plage de 60 à 95 % en poids, de manière davantage préférée dans la plage de 65 à 75 % en poids et de manière préférée entre toutes dans la plage de 68 à 72 % en poids sur la base du poids total de la couche B) ; et/ou
la teneur en composant b2) dans la couche B) est dans la plage de 5 à 40 % en poids, de manière davantage préférée dans la plage de 25 à 35 % en poids et de manière préférée entre toutes dans la plage de 28 à 32 % en poids sur la base du poids total de la couche B) ;
dans lequel les proportions en poids des composants (b1) et (b2) totalisent 100 % en poids.

5. Film multicouche rétractable de regroupement selon l'une des revendications précédentes, **caractérisé en ce que**
les composants selon la couche A) et/ou B) comprennent des additifs, de préférence sélectionnés dans le groupe consistant en les agents de glissement, les stabilisants UV, les pigments, les antioxydants, les agents de nucléation et les mélanges de ceux-ci, de préférence ces additifs sont contenus en une quantité de 0 à 5000 ppm, de préférence de 10 à 5000 ppm et de manière davantage préférée de 500 à 3000 ppm sur la base du poids total de la couche respective ; et/ou les composants selon la couche A) et/ou B) comprennent des adjuvants, de préférence sélectionnés dans le groupe consistant en les pigments, les charges, les agents antibloquants et les mélanges de ceux-ci, de préférence ces adjuvants sont contenus dans la plage de 0 à 5 % en poids, de préférence dans la plage de 0 à 3 % en poids, de manière davantage préférée dans la plage de 0 à 2 % en poids et de manière préférée entre toutes de 0 à 1 % en poids sur la base du poids total de la couche respective.

6. Film multicouche rétractable de regroupement selon l'une des revendications précédentes, **caractérisé en ce que** la couche A) est constituée des composants a1) à a3) et ces composants contiennent optionnellement des additifs et/ou la couche B) est constituée en des composants b1) à b2) et ces composants contiennent optionnellement des additifs.

7. Film multicouche rétractable de regroupement selon l'une des revendications précédentes, **caractérisé en ce que** le composant a1) présente une ou plusieurs des caractéristiques techniques suivantes :

un MFR$_2$ de 0,5 à 10 g/10 min (selon l'ISO 1133 à 190 °C sous une charge de 2,16 kg) ; un MFR$_{21}$/MFR$_2$ de 13 à 35 (MFR$_{21}$ à 190 °C sous une charge de 21,6 kg) ;
un MWD dans la plage de 2 à 7, de préférence dans la plage de 2 à 5.

8. Film multicouche rétractable de regroupement selon l'une des revendications précédentes, **caractérisé en ce que** le composant a1) comprend du 1-butène et du 1-hexène, de préférence est un terpolymère comprenant un copolymère d'éthylène-butène (i) et un copolymère d'éthylène-hexène (ii), de manière davantage préférée comprend un copolymère d'éthylène-butène (i) et un copolymère d'éthylène-hexène (ii) où les butène/hexène sont les seuls comonomères présents dans le composant respectif.

9. Film multicouche rétractable de regroupement selon l'une des revendications précédentes, **caractérisé en ce que** les composants a2) et/ou b2) présentent une ou plusieurs des caractéristiques techniques suivantes :

   les deux comonomères d'alpha-oléfine sont des alpha-oléfines en C4 à 10 ;
   le terpolymère multimodal présente un $MFR_{21}$ de 5,0 à 200 g/10 min déterminé selon l'ISO 1133 ;
   le terpolymère multimodal comprend

   i. une fraction à poids moléculaire plus bas qui est un homopolymère de polyéthylène et
   ii. une fraction à poids moléculaire plus élevé qui est un terpolymère d'éthylène et de deux comonomères d'alpha-oléfine ayant 4 à 10 atomes de carbone ;

   le terpolymère multimodal présente un $MFR_{21}$ dans la plage de 15,0 à 50,0 g/10 min ;
   le FRR21/5 du terpolymère multimodal est dans la plage de 10,0 à 50,0 ;
   Mw/Mn est dans la plage de 14 à 18 et de préférence de 15 à 16,5 ;
   la masse volumique dans la plage de 930 à 940 kg/m$^3$ et le Mw/Mn dans la plage de 10 à 20 ;
   de préférence les composants a2) et b2) sont identiques.

10. Film multicouche rétractable de regroupement selon l'une des revendications précédentes, **caractérisé en ce que** le composant a3)

   est un homopolymère ; et/ou
   est un polymère vierge ; et/ou
   présente un $MFR_2$ dans la plage de 0,10 à 20 g/10 min, de préférence dans la plage de 0,15 à 5 g/10 min, de manière davantage préférée dans la plage de 0,20 à 5 g/10 min et de manière préférée entre toutes dans la plage de 0,20 à 2,0 g/10 min ; et/ou
   présente une masse volumique dans la plage de 905 à 940 kg/m$^3$, de préférence dans la plage de 910 à 937 kg/m$^3$, de manière davantage préférée dans la plage de 915 à 935 kg/m$^3$ et de manière préférée entre toutes dans la plage de 918 à 925 kg/m$^3$.

11. Film multicouche rétractable de regroupement selon l'une des revendications précédentes, dans lequel le composant b1)

   • provient de déchets post-consommation ; et/ou
   • présente un $MFR_2$ dans la plage de 0,1 à 10 g/10 min, de préférence dans la plage de 0,2 à 5 g/10 min et de manière davantage préférée dans la plage de 0,3 à 0,8 g/10 min ; et/ou
   • une masse volumique dans la plage de 910 à 945 kg/m$^3$, de préférence dans la plage de 910 à 940 kg/m$^3$, de manière davantage préférée dans la plage de 915 à 935 kg/m$^3$ et de manière préférée entre toutes dans la plage de 918 à 925 kg/m$^3$.

12. Film multicouche rétractable de regroupement selon l'une des revendications précédentes, **caractérisé en ce que** le film présente une ou plusieurs des propriétés suivantes :

   une contrainte de traction à 15 % de déformation, déterminée selon l'ISO 527-3, dans la plage de 7,5 à 17,5 MPa, de préférence de 10 à 15 MPa et de manière davantage préférée de 12 à 13 MPa ; et/ou
   un retrait dans le sens machine, déterminé selon l'ISO 14616, dans la plage de 60 à 80 %, de préférence de 65 à 75 % et de manière davantage préférée de 71 à 73 % ; et/ou
   un retrait dans le sens transversal, déterminé selon l'ISO 14616, dans la plage de 20 à 30 %, de préférence de 22 à 28 % et de manière davantage préférée de 24 à 26 % ; et/ou une force de rétraction, déterminée selon l'ISO 14616, dans la plage de 0,5 à 1,5 kg/cm$^2$, de préférence de 0,8 à 1,2 kg/cm$^2$ et de manière davantage préférée de 0,95 à 1,05 kg/cm$^2$ ; et/ou
   une force de contraction, déterminée selon l'ISO 14616, dans la plage de 15 à 25 kg/cm$^2$, de préférence de 18 à 22 kg/cm$^2$ et de manière davantage préférée de 19 à 21 kg/cm$^2$ ; et/ou
   la couche A) présente une épaisseur dans la plage de 2 à 25 $\mu$m, de préférence de 3 à 15 $\mu$m et de manière davantage préférée de 6 à 9 $\mu$m ; et/ou
   la couche B) présente une épaisseur dans la plage de 10 à 100 $\mu$m, de préférence de 20 à 80 $\mu$m et de manière

davantage préférée de 30 à 40 $\mu$m ; et/ou
l'épaisseur totale du film est dans la plage de 15 à 150 $\mu$m, de préférence de 25 à 120 $\mu$m et de manière davantage préférée de 30 à 60 $\mu$m.

**13.** Film multicouche rétractable de regroupement selon l'une des revendications précédentes, **caractérisé en ce que** le film est constitué d'une couche B) centrale prise en sandwich par deux couches A) externes, dans lequel

les deux couches A) externes sont constituées de

a1) 12 à 18 % en poids d'un polymère multimodal d'éthylène avec au moins deux comonomères différents sélectionnés parmi les alpha-oléfines ayant de 4 à 10 atomes de carbone, ce polymère multimodal d'éthylène présentant une masse volumique dans la plage de 910 à 935 kg/m$^3$, et un Mw/Mn de 2 à 8 ;
a2) 12 à 18 % en poids d'un terpolymère multimodal d'éthylène et de deux comonomères d'alpha-oléfine dans lequel le terpolymère multimodal présente une masse volumique dans la plage de 930 à 940 kg/m$^3$ ; et
a3) 64 à 76 % en poids d'un homopolymère LDPE qui est un polymère vierge présentant une masse volumique dans la plage de 905 à 940 kg/m$^3$ et un MFR$_2$ dans la plage de 0,1 à 20 g/10 min ; et

la couche B) centrale est constituée de

b1) 65 à 75 % en poids d'un LDPE recyclé présentant un MFR$_2$ dans la plage de 0,1 à 10 g/10 min et une masse volumique dans la plage de 910 à 940 kg/m$^3$ ; et
b2) 35 à 25 % en poids d'un terpolymère multimodal d'éthylène et de deux comonomères d'alpha-oléfine dans lequel le terpolymère multimodal présente une masse volumique dans la plage de 930 à 940 kg/m$^3$.

**14.** Procédé de fabrication d'un film selon l'une des revendications 1 à 13, **caractérisé en ce que** le film est fabriqué par un procédé de coextrusion de film soufflé en une étape.

**15.** Utilisation d'un film selon l'une des revendications 1 à 13 à des fins d'emballage secondaire, de préférence pour des bouteilles et des canettes, de manière davantage préférée des bouteilles et des canettes dans le domaine

• des produits ménagers ;
• alimentaire ;
• des produits de santé ;
• des produits de boisson ;
• des bouteilles.

**16.** Utilisation de 20 à 40 % en poids, de préférence de 25 à 35 % en poids d'un terpolymère multimodal b2) tel que défini dans les revendications 1 et 9 dans une couche d'un film multicouche rétractable de regroupement comprenant dans la même couche au moins 50 % en poids, de préférence 60 à 80 % en poids et de manière davantage préférée 65 à 75 % en poids d'un LDPE b1) recyclé tel que défini dans les revendications 1 et 11, sur la base du poids global du film, pour améliorer les propriétés mécaniques et le comportement de rétraction du film multicouche, dans lequel les indications de poids sont basées sur le poids total de la couche comprenant b1) et b2).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9117886 A1
- DE 202018101226 U1
- EP 2415598 A
- WO 9744371 A
- WO 9618662 A

### Non-patent literature cited in the description

- Polymer Handbook. Wiley, 1989